**Europäisches Patentamt**

**European Patent Office**

**Office européen des brevets**

(19)

(11) Numéro de publication: **0 110 799**
**B1**

(12)

# FASCICULE DE BREVET EUROPEEN

(45) Date de publication du fascicule du brevet:
**25.06.86**

(21) Numéro de dépôt: **83430027.9**

(22) Date de dépôt: **09.08.83**

(51) Int. Cl.⁴: **B 01 D 29/30**, B 30 B 9/22,
B 01 D 23/04

(54) **Dispositif simplifié pour la filtration et la séparation en continu des produits fluides et solides.**

(30) Priorité: **03.09.82 FR 8215148**

(43) Date de publication de la demande:
**13.06.84 Bulletin 84/24**

(45) Mention de la délivrance du brevet:
**25.06.86 Bulletin 86/26**

(84) Etats contractants désignés:
**AT BE CH DE GB IT LI LU NL**

(56) Documents cités:
**DE - A - 2 200 158**
**FR - A - 1 204 824**
**FR - A - 2 232 345**
**FR - A - 2 383 130**
**FR - A - 2 489 806**
**US - A - 2 724 508**
**US - A - 3 348 578**

(73) Titulaire: **Sauvaget, Jean Claude, Chemin de Banon Le Joucas, F-13100 Aix en Provence (FR)**

(72) Inventeur: **Sauvaget, Jean Claude, Chemin De Banon Le Joucas, F-13100 Aix en Provenve (FR)**

(74) Mandataire: **Roman, Alphonse, 35 Rue Paradis, F-13001 Marseille (FR)**

ACTORUM AG

## Description

L'objet de l'invention concerne un dispositif simplifié pour la filtration et la séparation en continu des produits fluides et solides.

Il est destiné à l'épuration et à la concentration des boues produites par les installations de traitement des eaux ainsi qu'en général, à toute liqueur mixte constituée par un liquide et des matières solides, dans les secteurs industriels, agricoles, alimentaires et autres, afin d'en réduire le volume, en vue d'une évacuation à moindre coût.

Les dispositifs utilisés à ce jour, utilisent une infrastructure lourde, entraînant une complexité mécanique importante et des investissements élevés; les installations sont généralement constituées par des concentrateurs centrifuges ou encore par des stations filtrantes, avec presses, transporteurs, filtres pneumatiques ou sous vide. On emploie, également, des filtres à bande ou des sacs filtrants (voir par exemple FR-A-2 489 806).

Toutes ces installations exigent des technologies compliquées ou ayant des efficacités variables.

Le dispositif suivant l'invention supprime ces inconvénients, réduit dans de très grandes proportions le prix de revient des installations, tout en améliorant le rendement, en s'adaptant facilement aux différentes qualités de liqueur à traiter, tout en permettant de maîtriser la qualité du produit.

L'objet de l'invention est donc un dispositif destiné aux installations d'épuration et de concentration des boues entraînées par les eaux de distribution ainsi qu'en général de toute liqueur mixte constituée par un liquide et des matières solides dans les secteurs industriels, agricoles, alimentaires et autres, le dispositif comportant une admission avec distribution par gravité de boues dans une manche filtrante, caractérisé en ce que l'admission comporte un clapet anti-retour et en ce que la manche filtrante est pourvue à son extrémité opposée à l'admission d'un dispositif de contre-pression ne s'ouvrant pour laisser passer les boues que sous l'effet de la pression exercée sur la manche filtrante par des manchettes presseuses disposées le long de ladite manche.

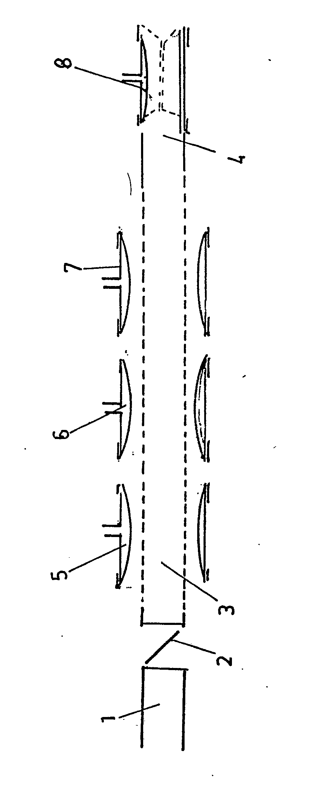

Sur le dessin annexé donné à titre d'exemple non limitatif d'une des formes de réalisation de l'objet de l'invention le dispositif est représenté dans son ensemble vu en élévation et en coupe.

La boue à concentrer est admise avec ou sans conditionnement préalable, dans le dispositif constitué par un collecteur aducteur 1 pourvu d'un clapet anti-retour 2 pour être déversée dans une manche filtrante 3 en tissu.

La boue déversée pénètre jusqu'à atteindre le point de contre-pression 4, qui, par obturation 8, permet le remplissage du secteur situé entre le clapet 2 et l'obturation 4. Il se produit alors entre les mailles du tissu un premier égouttage.

A ce moment on met sous pression, alternativement ou simultanément, par un fluide compressé, les manchettes 5, 6, 7, qui exercent une pression périphérique.

Cette pression a pour résultat de fermer le clapet 2 et d'augmenter la pression autre que celle de la poussée d'introduction afin de produire une filtration. De plus, la pression des manchettes 5, 6, 7, étant supérieure à la pression de l'obturation 8 permet d'évacuer une petite quantité de boue concentrée. Lors du relachement se produit automatiquement un décolmatage du tissu filtrant 3. Ceci supprime les opérations de lavage, jusqu'à ce jour utilisées et indispensables.

Immédiatement après le relachement des manchettes 5, 6, 7, le clapet 2 s'ouvre. Une nouvelle quantité de boue est admise. Le dispositif n'utilise pour son fonctionnement qu'une source de fluides sous pression, faisant varier le volume des manchettes 5, 6, 7, et 4.

Des électrovannes de mise sous pression et de mise à l'atmosphère combinées avec des relais (et temporisateurs), permettent de moduler tous les cycles, compte tenu de la nature des boues.

Les mailles de la manche filtrante permettent d'améliorer et d'adapter les taux de capture et de supporter des pressions de filtration plus ou moins grandes.

Enfin le diamètre de la manche d'où dépend l'épaisseur du «gâteau», permet de faire varier les temps de filtration et les volumes traités.

Les formes, dimensions et dispositions des différents éléments, comme d'ailleurs les matières utilisées pour leur fabrication, pourront varier dans la limite des équivalents.

## Revendications

1. Dispositif destiné aux installations d'épuration et de concentration des boues entraînées par les eaux de distribution ainsi qu'en général de toute liqueur mixte constituée par un liquide et des matières solides dans les secteurs, industriels, agricoles, alimentaires et autres, le dispositif comportant une admission (1) avec distribution par gravité, de boues, dans une manche filtrante (3), caractérisé en ce que l'admission (1) comporte un clapet anti-retour (2) et en ce que la manche filtrante (3) est pourvue, à son extrémité opposée à l'admission (1) d'un dispositif de contre-pression (4) ne s'ouvrant pour laisser passer les boues que sous l'effet de la pression exercée sur la manche filtrante (3) par des manchettes presseuses (5, 6, 7) disposées le long de ladite manche.

2. Dispositif suivant la revendication 1 se caractérisant par le fait que les manchettes presseuses sont constituées par des éléments gonflables par fluides liquides ou gazeux compressant périphériquement, alternativement ou simultanément, la manche filtrante (3).

3. Dispositif suivant la revendication 1 se caractérisant par le fait que le dispositif de contre-pression (4) est constitué par une manchette (8) dont le changement de volume amène l'obturation de la manche (3) jusqu'à ce que la pression des manchettes (5, 6, 7), dépasse en intensité cette contre-pression.

4. Dispositif suivant l'une des revendications 1 à 3 se caractérisant par le fait que les mailles, le diamètre et la dimension de la manche filtrante (3) sont appropriées aux produits et débit des stations et les manchettes (5, 6, 7, 8), sont reliées à des sources de fluides sous pression avec des électro-vannes et relais automatisant les cycles.

die Manschetten (5, 6, 7, 8) über Magnetventile und Relais für die Automatisierung der Zyklen an Druckflüssigkeitsbehälter angeschlossen sind.

## Patentansprüche

1. Vorrichtung für Anlagen zum Klären und Konzentrieren von Schlammstoffen im Leitungswasser sowie generell in jeglicher Lösung, die aus einer Flüssigkeit und festen Stoffen besteht, sei es auf industriellem, landwirtschaftlichen, Lebensmittel- oder sonstigem Sektor, wobei die Vorrichtung aus einem Einlass (1) und einem Filteransatz (3) besteht, in dem sich der Schlamm durch Schwerkraft verteilt; charakteristisch hierbei ist, dass der Einlass (1) ein Rückschlagventil (2) enthält und der Filteransatz (3) an seinem dem Einlass (1) gegenüberliegenden Ende mit einer Gegendruckvorrichtung versehen ist, die sich nur dann zum Durchlassen des Schlammes öffnet, wenn die Druckmanschetten (5, 6, 7) entlang dem Filteransatz (3) auf letzteren Druck ausüben.

2. Vorrichtung entsprechend Patentanspruch 1; charakteristisch hierbei ist, dass sich die Druckmanschetten mit Flüssigkeit oder Gas aufblähen lassen und den Filteransatz (3) peripherisch zusammenpressen, und zwar abwechselnd oder gleichzeitig.

3. Vorrichtung entsprechend Patentanspruch 1; charakteristisch hierbei ist, dass die Gegendruckvorrichtung (4) aus einer Manschette (8) besteht, deren Volumenänderung das Verschliessen des Ansatzes (3) verursacht, bis der Druck der Manschetten (5, 6, 7) diesen Gegendruck an Stärke übertrifft.

4. Vorrichtung entsprechend einem der Patentansprüche 1 bis 3; charakteristisch hierbei ist, dass die Maschen, der Durchmesser und die Grösse des Filteransatzes (3) den jeweiligen Produkten und der Durchflussmenge der Anlagen angemessen sind und

## Claims

1. Device designed for installations for sewage purification and the concentration of sludge carried along by mains water and generally any mixed solution consisting of a liquid and solid matter in the food, agricultural, industrial and other sectors, the device comprising an admission (1) with gravity supply of sludge into a filtering cowl (3), characterized in that the admission (1) comprises a non-return valve (2) and that the filtering cowl (3) is provided, at its extremity opposite the admission (1) with a back pressure device (4) only opening to allow sludge to pass under the effect of the pressure exerted on the filtering cowl (3) by presser sleeves (5, 6, 7) disposed along the said cowl.

2. Device according to claim 1 characterized by the fact that the presser sleeves consist of elements which are inflatable by liquid or carbonated fluids peripherally, alternately or simultaneously compressing the filtering cowl (3).

3. Device according to claim 1 characterized by the fact that the back pressure device (4) consists of a sleeve (8) whose change in volume results in the sealing of the cowl (3) until the pressure of the sleeves (5, 6, 7) exceeds the intensity of this back pressure.

4. Device according to one of claims 1 to 3 and characterized by the fact that the meshes, diameter and size of the filtering cowl (3) are suitable for the products and flowrate of stations and the sleeves (5, 6, 7, 8) are connected to fluid sources under pressure with electrovalves and relays automating the cycles.